# EUROPEAN PATENT APPLICATION

(11) **EP 1 237 038 A2**
(43) Date of publication of application: **04.09.2002**
(21) Application number: 02003444.3
(22) Date of filing: 14.02.2002
(51) Int. Cl.: G02F 1/13357, F21V 8/00

(54) **Backlight unit for liquid crystal display device and portable terminal equipment**

(30) Priority: 15.02.2001 JP 2001039253
(71) Applicant: NEC CORPORATION, Tokyo (JP)
(72) Inventor: Baba, Masatake, Tokyo (JP)
(74) Representative: Glawe. Delfs. Moll

(57) **Abstract**

The invention relates to a backlight unit for a LCD unit provided with a light guide plate (3) having a planar front surface (15) and rear surface (14), at least one light source unit (2) provide to at least one lateral side (13) of the light guide plate (3) and a passive reflector (4) having a planar reflecting surface provided close to the rear surface (14) of the light guide plate. The rear surface of the light guide plate being patterned and comprising ridge line parallel to the lateral side (13) such as to define plural flat reflection regions (17) for redirecting the light emitted from the light source unit (2) toward the front surface (15) and plural flat transmission regions (18) for transmitting the light coming from the front surface (15) to the reflector (4) characterized in that an angle between the planar front surface (15) of the light guide plate and at least one of the flat reflection regions (17) is larger than an angle between that planar front surface (15) of the light guide plate and at least one of the flat transmission regions (18). The invention is also characterized in that portable terminal equipment is provided with the backlight unit for the LCD device.

## Description

### BACKGROUND OF THE INVENTION

### 1. Field of the Invention

The present invention relates to a back light unit for liquid crystal display device, more particularly to a back light unit for portable terminal equipment.

### 2. Discussion of the Related Art

A liquid crystal display (LCD) device is widely used for a display device for information equipment such as a mobile telephone, personal digital assistants (PDA) and a computer etc.

LCD requires a light source because it is a non-emissive device. LCD can be classified into a reflection type LCD and a transmission type LCD depending upon a lighting method. In the reflection type LCD, incident light from the front side (the side facing to an observer) of a liquid crystal panel is reflected on the liquid crystal panel and the reflected light is visible.

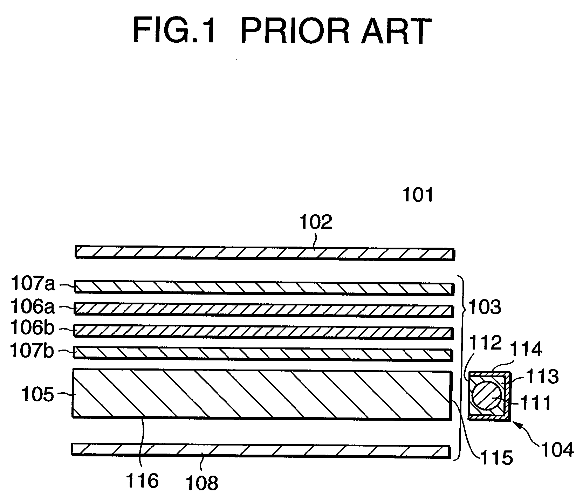

As shown in FIG. 1, the transmission type LCD 101 is provided with a liquid crystal panel 102 and a backlight unit 103 arranged on the rear side of the liquid crystal panel 102.

The backlight unit 103 emits light to the liquid crystal panel 102 from the rear side and the light passing through the liquid crystal panel 102 is visible to the observer on the front side.

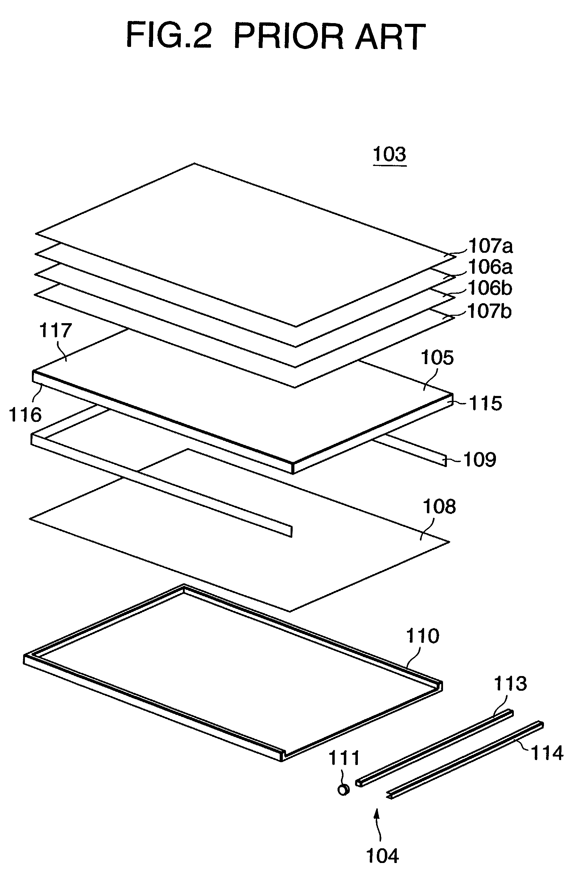

The backlight unit 103 is provided with a light source unit 104, a light guide plate 105, a first lens film 106a, a second lens film 106b, a first diffuser 107a, a second diffuser 107b, a reflector 108, a strip reflector 109 and a holding frame 110 as shown in FIGs. 1 and 2.

The light source unit 104 is provided with a spotlight 111 formed by a white light emitting diode (LED) and others, a light guide 113 made of transmissible material for leading light emitted from the spotlight 111 in a elongated direction and emitting as band light from a light outgoing face 112 (see FIG. 1) which is one side and a reflector part 114 which covers the three sides except the light outgoing face 112 of the light guide 113 and the section of which is substantially U-shaped as shown in FIG. 2.

The light guide plate 105 is formed by a flat part made of transmissible material and is arranged so that a side 115 of the light guide plate 105which is an end face on one side is opposite to the light outgoing face 112 of the light source unit 104. In the light guide plate 105, the end face of incident light side 115 receives band light outgoing from the light source unit 104, the light is reflected on a light reflecting surface 116 substantially perpendicular to the end face of incident light side 115 and area light is radiated from a light radiation surface 117 opposite to the light reflecting surface 116 toward the liquid crystal panel 102 arranged on the front side of the backlight unit 103.

The first lens film 106a and the second lens film 106b converge light outgoing from the light radiation surface 117 arranged on the front side of the light guide plate 105 and secure predetermined luminance.

The first diffuser 107a and the second diffuser 107b are respectively arranged between the first lens film 106a and the liquid crystal panel 102 and between the second lens film 106b and the light guide plate 105, correct the dispersion of luminance and enhance the uniformity of luminance.

The reflector 108 is arranged on the rear side of the light guide plate 105, receives light outgoing from the light guide plate 105 and reflects it toward the light guide plate 105.

The strip reflector 109 is arranged so that it is opposite to the three side end faces of the light guide plate 105 except the end face of incident light side 115 opposite to the light source unit 104.

The holding frame 110 is a part like a tray, the reflector 108 is laid at the bottom, the strip reflector 109 is bonded to the inner wall, and the light source unit 104 and the light guide plate 105, first lens film 106a, second lens film 106b, first diffuser 107a and second diffuser 107b which are laminated are laid and held on the reflector 108.

The light reflecting surface 116 of the light guide plate 105 may have the irregular surface such as emboss or a frosting face or for example, circular dot-shaped material having high reflectivity is printed via a screen.

Technique for reflecting and diffusing incident light from the light source unit 104 with the rear surface of the light guide plate 105 having rough surface as described above is disclosed in Japanese Patent Laid-open No. 2000-155309.

However, as incident light on the light reflecting surface 116 of the light guide plate 105 from the light source unit 104 is irregularly reflected on the surface, it does not have large directivity. Therefore, as described above, unless using the first lens film 106a and the second lens film 106b, predetermined luminance cannot be secured.

In the case that there is sufficient ambient light when a LCD is used outdoors, it may be desired that the spotlight 111 is unlit from the viewpoint of saving power and only a power unit in the body of electronic equipment such as a mobile telephone having backlight unit 103 is mounted is turned on. The spotlight 111 may be unlit because of failure.

As described above, in case display only by ambient light is desired, there is a problem that ambient light from the side of the liquid crystal panel 102 attenuates passing plural lens films and even if the ambient light is efficiently reflected at the light reflecting surface 116, the intensity is too weak to light the liquid crystal panel 102.

To solve this problem, Japanese Patent Laid-open No. Hei 11-295714 shows a technique for enhancing the directivity of reflected light by turning the rear surface of a light guide plate into a prismatic surface.

However, this prismatic surface provided to the rear surface of the light guide plate 105 is provided only to enhance the directivity of illuminating light in a predetermined direction when incident light from a band light source is reflected forward (on the side of the liquid crystal panel).

That is, this prismatic surface is provided to converge light diffusing in the elongated direction of the band light source. Therefore, protrusions formed by a pair of slant faces are repeatedly formed on the prismatic surface in the elongated direction of the band light source. In other words, this prismatic surface is formed so that a direction of the ridge line is perpendicular to the elongated direction of the band light source.

Therefore, the direction of the highest luminance of light from the light guide plate remains inclined by a predetermined angle in an orientation apart from the band light source.

Therefore, to converge this illuminating light and make the direction in which the illuminating light has the highest luminance approach a direction perpendicular to the outgoing face, the lens films are required between the light guide plate and the liquid crystal panel. The prismatic surface of the lens film is formed so that a direction of the ridge line is parallel to the elongated direction of the band light source.

However, the ambient light attenuates in the lens film as described above.

In the technique disclosed in this patent application, there is no idea to'utilize ambient light and the prismatic surface provided to the rear surface of the light guide plate is not designed to utilize ambient light.

Therefore, even if ambient light reaches the prismatic surface of the light guide plate without attenuating so much, it is not efficiently reflected forward and it is difficult to utilize the ambient light as illuminating light.

Heretofore, a light guide plate that radiates light emitted from a light source forward and simultaneously, can efficiently reflect ambient incident light from the front side forward has not been proposed and the idea itself has not been existed. It was difficult to utilize both emitted light from a light source and ambient light as illuminating light.

Therefore, there is a problem that the display cannot be used when the spotlight 111 is unlit and it is difficult to achieve high luminance.

As described above, as the plural lens films are required to be necessarily arranged between the light guide plate and the liquid crystal panel, there is a problem that the number of parts is increased and thinning, miniaturization and the reduction of the cost are obstructed.

The invention is made in view of the above-mentioned situations and the object is to provide a backlight in which display on a liquid crystal panel is enabled utilizing ambient light even if the spotlight 111 is unlit and high luminance can be achieved, and to provide LCD with the backlight and portable terminal equipment with the LCD.

Also, another object is to provide a backlight the number of parts of which is reduced, keeping high luminance to thin and miniaturize the backlight and the cost of which can be reduced, and to provide LCD with the backlight and portable terminal equipment with the LCD.

### SUMMARY OF THE INVENTION

A backlight unit for a LCD device according to the invention is provided with a light guide plate, at least one light source unit provided to at least one side of the light guide plate, a reflector provided so that it is opposite to the rear surface of the light guide plate, plural reflection regions and plural transmission regions provided to the rear surface of the light guide plate and is characterized in that an angle between the surface opposite to the rear surface of the light guide plate and at least one of the reflection regions is larger than an angle between the surface and at least one of the transmission regions. The backlight unit for the LCD device according to the invention is also characterized in that portable terminal equipment is provided with the backlight unit for the LCD device.

### BRIEF DESCRIPTION OF THE DRAWINGS

FIG. 1 is a schematic block diagram showing a conventional type transmission type LCD device;
FIG. 2 is an exploded perspective view showing a conventional type backlight;
FIG. 3 is an exploded perspective view showing the configuration of a backlight equivalent to one embodiment of the invention;
FIG. 4 is a sectional view showing the configuration of a LCD device using a backlight according to the invention;
FIG. 5 is a plan showing a light source unit and a light guide plate forming the backlight according to the invention in a state in which a part is broken;
FIG. 6 is a plan showing a part A in FIG. 5 in an enlarged state;
FIG. 7 is a sectional view viewed along a line B-B in FIG. 6;
FIG. 8 is a sectional view showing the configuration of the light source unit and the light guide plate;
FIG. 9 is an explanatory drawing for explaining the operation of the backlight according to the invention;
FIG. 10 is an explanatory drawing for explaining the operation of the backlight according to the invention;
FIG. 11 an explanatory drawing for explaining the operation of the backlight according to the invention;
FIG. 12 is an explanatory drawing for explaining the operation of the backlight according to the invention;
FIG. 13 is an explanatory drawing for explaining the operation of the backlight according to the invention;
FIG. 14 is a sectional view showing the configuration of a light guide plate of a backlight equivalent to another embodiment of the invention;
FIG. 15 is a perspective view showing the configuration of a portable information terminal as electronic equipment using the backlight according to the invention; and
FIG. 16 is a perspective view showing the configuration of a mobile telephone as electronic equipment using the backlight according to the invention.

### DETAILED DESCRIPTION OF THE PREFERRED EMBODIMENTS

The invention will be now described herein with reference to illustrate embodiments. Those skilled in the art will recognize that many alternative embodiments can be accomplished using the teachings of the present invention and that the invention is not limited to the embodiments illustrated for explanatory purposes.

Preferred embodiments of the invention will be described below.

First, a backlight equivalent to one embodiment of the invention will be described.

The backlight equivalent to this embodiment is provided with a light source unit, a light guide plate and a reflector. The light source unit emits substantially band-shaped light from the side. The light guide plate receives the light emitted from the light source unit and reflects it to the front surface at the prismatic surface provided at the back surface. The reflector is arranged opposing to the prismatic surface of the light guide plate for reflecting light from the prismatic surface toward the front surface. The prismatic surface has plural reflection regions and plural transmission regions. The reflection regions reflect incident light toward front surface. The transmission regions transmit ambient light and the ambient light reflects at the reflector and passes through the transmission part to the front surface.

An angle between the surface of the light guide plate opposite to the rear surface and at least one of the reflection regions is larger than an angle between the surface and at least one of the transmission regions. Hereby, ambient light reaches mainly the transmission regions of the prismatic surface and is utilized as illuminating light.

Therefore, ambient light from the liquid crystal panel can be also made the best use of to illuminate the liquid crystal panel and the luminance can be enhanced.

As the lens films provided on the front side of the light guide plate of the conventional type backlight are removed, ambient light from the liquid crystal panel reaches the light guide plate without attenuating so much even if the ambient light is relatively weak. Therefore, the ambient light can be securely utilized as illuminating light.

In case that intense of ambient light is enough, an observer can view display of the liquid crystal panel even if the light source unit is turned off. Therefore, the backlight equivalent to this embodiment can contribute to power saving. Even if the light source unit is turned off because of failure, an observer can view display of the liquid crystal panel.

As lens films for convergence are not required to be arranged between the light guide plate and the liquid crystal panel, the number of the parts can be reduced and the cost of the backlight can be reduced.

Next, referring to the drawings, the backlight equivalent to one embodiment of the invention will be described.

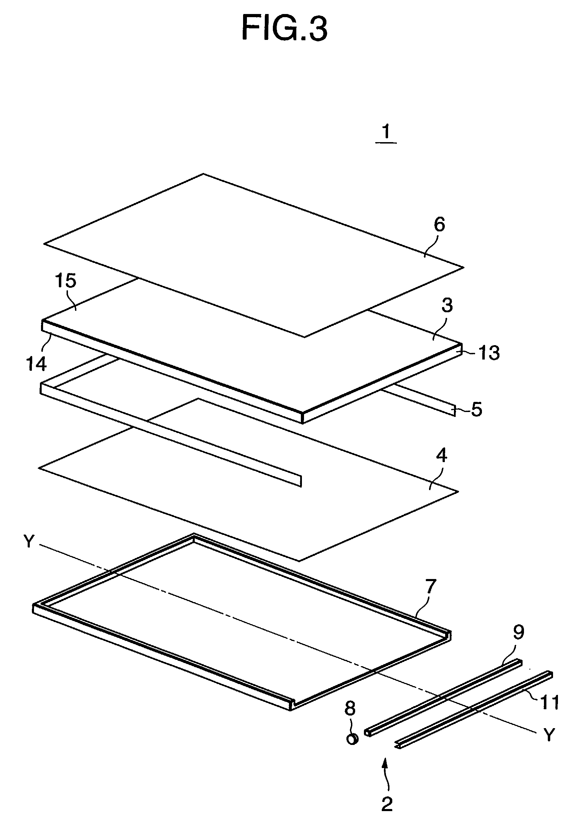

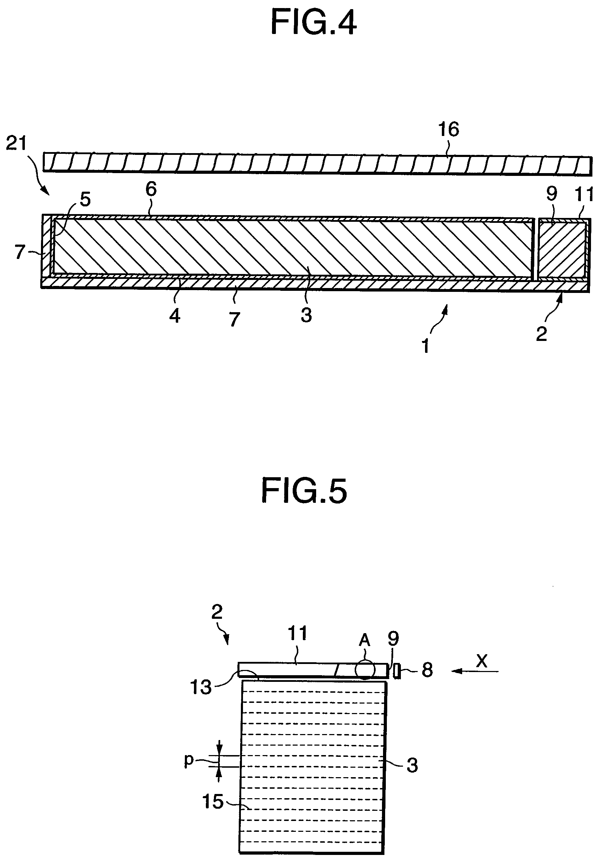

The backlight 1 equivalent to this embodiment is provided with a light source unit 2, a light guide plate 3, a reflector 4, a strip reflector 5, a diffuser 6 and a holding frame 7 as shown in FIGs. 3 and 4.

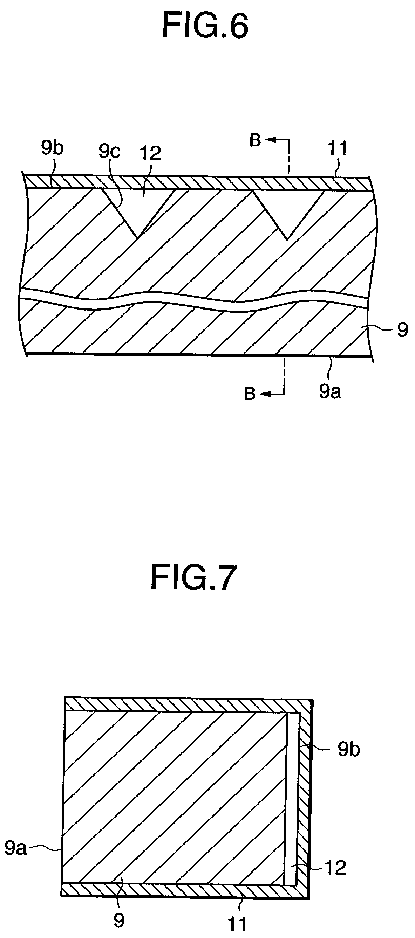

The light source unit 2 is provided with a spotlight 8 made of white LED, a rod light guide 9 that radiates light emitted from the spotlight 8 from the light outgoing face 9a a rod light guide 9 toward the light guide plate 3 and a U-shaped reflecting part 11 as shown in FIGs. 3 and 7.

The rod light guide 9 is made of transmissible material such as acrylic resin and a wedge type concave portion 9c is regularly formed on the side of the opposite surface 9b opposite to the light guide plate 3 as shown in FIGs. 6 and 7.

The reflecting part 11 is made of metal such as aluminum and resin to which a white film is applied on the surface for reflecting light and is bonded to the rod light guide 9 so that the reflecting part covers three sides of the rod light guide 9 except the light outgoing face 9a.

In a joint in which the concave portion 9c is formed out of the joints of the light guide 9 and the reflecting part 11, a substantially prismatic space 12 including air is formed.

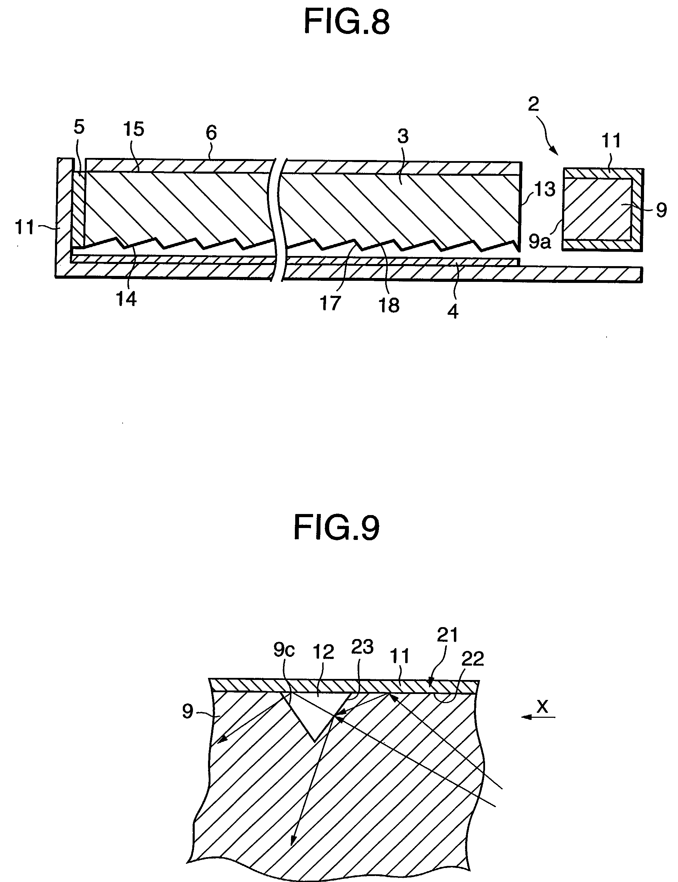

The light guide plate 3 is formed by a flat plate which. is made of acrylic resin for example. As shown in FIG. 8, the light guide plate 3 is arranged so that the side 13 is opposite to the light outgoing face 9a of the rod light guide 9 of the light source unit 2. The light guide plate 3 receives light from the side 13 and reflects the light at the.rear surface 14 to the front surface.

An angle between a front surface 15 of the light guide plate 3 opposite to the rear surface 14 and the reflection regions 17 is larger than an angle between the front surface and the transmission regions 18.

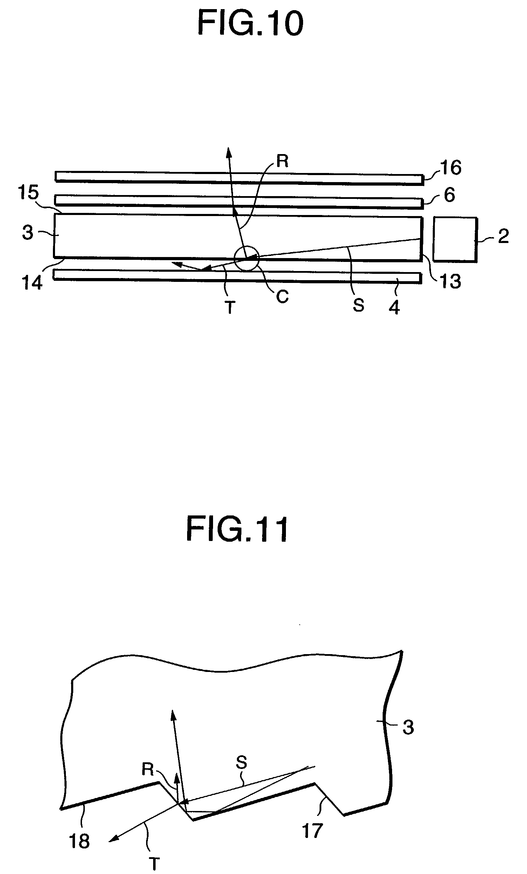

As shown in FIG. 11, the reflection region 17 reflects incident light "S" from the side 13 so that light "R" is utilized to illuminate the liquid crystal panel 16, and is inclined at an angle of approximately 40 to 50□ with the front surface 15 for example.

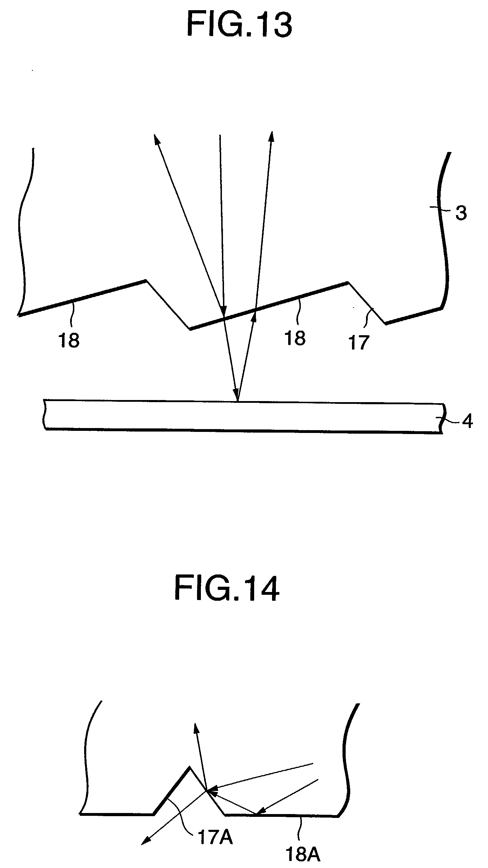

As shown in FIG. 13, the transmission region 18 transmits most of the ambient light from the front surface 15 and passes some of the ambient light. The light is reflected at the reflector 4 toward the front surface 15 so that the light is utilized as illuminations for the liquid crystal panel 16. The transmission region 18 is inclined at an angle of a few degrees with the front surface 15 for example.

The reflection region 17 and the transmission region 18 are periodically formed at predetermined pitch p (for example, p = 100 µm) as shown in FIG. 5. The rear surface 14 is formed so that a direction of a ridge line is parallel to an elongated direction x of the rod light guide 9 as shown in FIG. 5.

Light without being reflected on the reflection region 17 is also reflected at the reflector 4 and passes through the transmission region 18 toward the front surface 15.

The reflector 4 is arranged opposing to the rear surface of the light guide plate 3 and reflects light from the light guide plate 3 toward the front surface 15.

The strip reflector 5 is arranged to surround three sides of the light guide plate 3 except the side 13 opposite to the light source unit 2 and reflects light that leaks from the three sides of the light guide plate 3.

The diffuser 6 is arranged between the light guide plate 3 and the liquid crystal panel 16, corrects the dispersion of luminance and enhances the uniformity of luminance.

The reflector 4 is laid at the bottom of the holding frame 7, the strip reflector 5 is bonded to the inner wall, the light source unit 2 and the laminated light guide plate 3 and diffuser 6 are laid and held on the reflector 4.

The backlight 1 equivalent to this embodiment forms LCD 21 by being arranged on the rear side of the transmission type liquid crystal panel 16. The backlight 1 radiates illuminating light toward the liquid crystal panel 16, also reflects ambient light from the front surface of the liquid crystal panel 16 toward the liquid crystal panel 16 and makes an observer visible. Even if the spotlight 8 is unlit, ambient light transmitted through the liquid crystal panel 16 is reflected and used for illuminating the liquid crystal panel 16.

The liquid crystal panel 16 is provided with a substrate where multiple transparent pixel electrodes are formed, an opposite substrate which is fixed opposite to the substrate via the clearance of a few µm and where a colored layer (a color filter) is formed, a liquid crystal layer filled in the clearance and a pair of deflecting plates arranged outside the substrate and outside the opposite substrate.

Next, the operation of the backlight 1 equivalent to this embodiment will be described.

As shown in FIGs. 3 and 9, light emitted from the spotlight 8 is propagated inside the rod light guide 9 and reaches a boundary portion 210 between the rod light guide 9 and the reflecting part 11. A part of the light is reflected at a boundary surface 22 between the rod light guide 9 and the reflecting part 11 and a part of the light is reflected at a boundary surface 23 between the rod light guide 9 and the space 12 and a part of the light is deflected at the boundary surface 23 and the light totally outgoes from the light outgoing face 9a, advancing in a elongated direction "x" and is incident on the side 13 as substantially even band light.

As shown in FIGs. 10 and 11, the light "S" from the side 13 of the light guide plate 3 reaches reflection region 17 and most of the light is reflected at the reflection region 17 to the front surface 15 in a direction shown as "R" in FIG. 11.

A slight part of light that reaches the reflection region 17 is transmitted through the reflection region 17 as leaked light "T". However, the light that is reflected at the reflector 4 to the front surface 15 and is utilized as illumination.

The above-mentioned direction of the light "R" reflected to the front surface 15 is substantially even and has the highest luminance at a direction substantially coincident with a normal direction of the front surface 15.

The light "R" is transmitted in the diffuser 6 to correct dispersion of luminance and utilized as illumination of the liquid crystal panel 16. When the light passes the diffuser 6, Moire fringes which are interference fringes produced between the ridge line of the rear surface 14 and the array of picture elements of the liquid crystal panel 16 substantially disappear in case they are viewed from the side of an observer.

Next, a case when the spotlight 8 is unlit will be described.

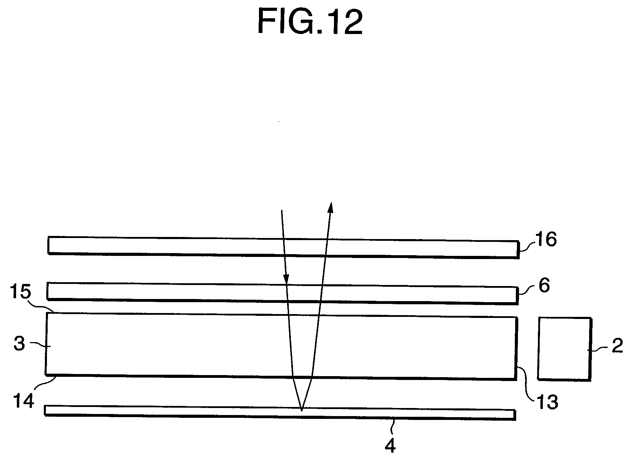

As shown in FIGs. 12 and 13, when ambient light reaches the backlight from the side of the liquid crystal panel 16, it is first transmitted in the diffuser 6. At this time, the quantity of attenuation after transmission of the intensity of the ambient light is slight. This transmitted light is incident on the light guide plate 3 from the front surface 15 and further, reaches mainly the transmission region 18 of the rear surface 14.

Most of the incident light is deflected at the transmission region 18 and is reflected at the reflector 4 to the front surface 15. The light is utilized as illumination of the liquid crystal panel 16. The transmittance of the light guide plate 3 is relatively high and the attenuation of the ambient light is relatively small.

It is also performed when the spotlight 8 is lit that ambient light is reflected and irradiates the liquid crystal panel 16.

Therefore, ambient light from the side of the liquid crystal panel 16 can be also made the best use of to illuminate the liquid crystal panel 16. Therefore, the luminance can be enhanced.

As the lens films provided on the front side of the light guide plate of the conventional type backlight are removed, ambient light which from the side of the liquid crystal panel 16 reaches the light guide plate 3 without being attenuated so much even if the ambient light is relatively weak. Therefore, the ambient light can be securely utilized as illuminating light.

In case ambient light has enough intensity, an observer can view display on the liquid crystal panel 16 even if the spotlight 8 is unlit. Therefore, this invention can contribute to power saving. Even if the spotlight 8 is unlit because of failure, an observer can view display on the liquid crystal panel 16.

In addition, because the prismatic surface of the light guide plate 3 is optimally designed to use for a front light type, it can be used as it is without being changed so as to reflect ambient light at the rear surface 14.

As described above, as the plural lens films for convergence are not required to be arranged between the light guide plate 3 and the liquid crystal panel 16, the number of parts can be reduced and the cost of the backlight can be reduced.

As white LED of the spotlight is used for a light source, an inverter required in case a fluorescent lamp is used is not required, and the backlight 1 and LCD 21 provided with the backlight 1 can be miniaturized and lightened.

Referring to the drawings, the embodiment of the invention has been described in detail, however, the concrete configuration is not limited to this embodiment and even if the change of design in a range which does not deviate from the object of the invention is made, it is included in this invention.

For example, in the above-mentioned embodiment, the case that for the prismatic surface, the abruptly inclined reflection region 17 and the gently inclined transmission region 18 are repeated is described, however, the uniformity of the luminance of area illuminating light radiated from a light radiation surface can be enhanced by forming a symmetrical wedge type groove 17A as a reflecting part and a flat part 18A as a transmission part as shown in FIG. 14 and particularly applying the invention to a case that a light guide and a spotlight are arranged on the sides of opposite two side end faces of a light guide plate.

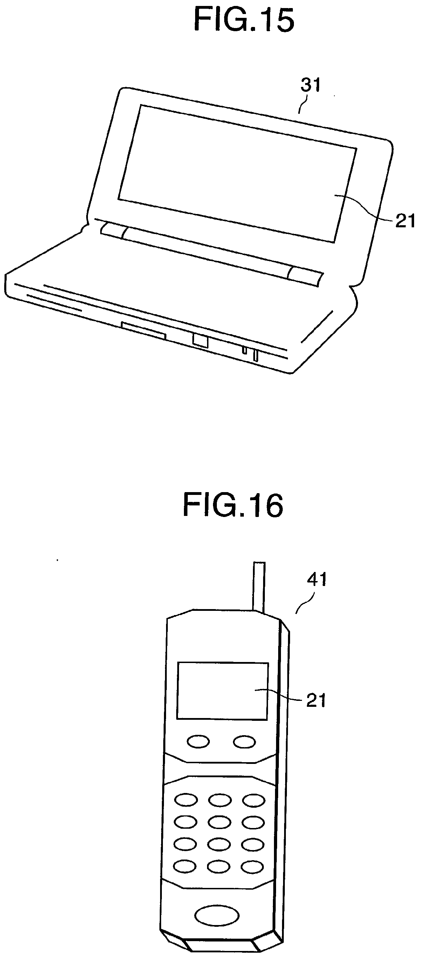

As shown in FIG. 15, a portable information terminal 31 such as PDA as electronic equipment can be acquired using LCD 21 provided with the backlight 1 described in the embodiment, in the portable information terminal 31, the luminance is enhanced, compared with that in the conventional type and even if the backlight is unlit, the portable information terminal can be used.

LCD 21 provided with the backlight according to this invention may be also applied to a portable personal computer and a notebook-sized personal computer except the portable information terminal.

As shown in FIG. 16, a mobile telephone 41 can be acquired using LCD 21 provided with the backlight according to this invention, in the mobile telephone 41, the luminance is enhanced, compared with that in the conventional type and even if the backlight is unlit, the mobile telephone can be used.

The case that white LED is used for the spotlight 8 in the light source unit 2 is described above, however, the spotlight is not limited to white LED, LED that emits light of another color (for example, red) may be also used and an incandescent lamp may be also used in place of LED. The case that light emitted from the spotlight 8 is converted to band light for radiation is described above, however, a linear light source such as a fluorescent lamp may be also used.

In the above-mentioned embodiments, the case that the rear surface 14 is formed so that the direction of the ridge line of the rear surface 14 is parallel to the elongated direction "x" of the rod light guide 9 is described above, however, the rear surface 14 may be also formed so that a direction of the ridge line of the rear surface 14 becomes a direction turned by a predetermined inclination θ counterclockwise (that is, rising right) from the elongated direction "x" of the rod light guide 9. In this case, the inclination θ is set to 23□ for example. Hereby, Moire fringes produced between the ridge line of the rear surface 14 and the array of picture elements of the liquid crystal panel 16 can be more securely reduced.

In case the rear surface 14 is formed so that the direction of the ridge line becomes the direction turned by the predetermined inclination θ counterclockwise from the elongated direction "x" of the rod light guide 9 as described above, the diffuser 6 can be also omitted. Hereby, ambient light is led to the light guide plate 3 without being attenuated and can be more securely utilized as illuminating light.

As described above, according to the invention, when ambient light is incident on the light guide plate of the backlight from the side of the liquid crystal panel, it reaches mainly the transmission region of the prismatic surface of the light guide plate, a part of incident light on the transmission region is reflected on the transmission region and is returned to the side of the light radiation surface, a part is deflected on the transmission region, reaches the passive reflector, is reflected on the passive reflector, is transmitted through the transmission region, is returned to the side of the light radiation surface, irradiates the liquid crystal panel and is utilized as illuminating light.

Therefore, ambient light from the liquid crystal panel can be also made the best use of to illuminate the liquid crystal panel. Therefore, the luminance can be enhanced.

As the lens films provided on the front side of the light guide plate of the conventional type backlight are removed, ambient incident light from the side of the liquid crystal panel reaches the light guide plate without being attenuated so much even if the ambient light is relative weak. Therefore, the ambient light can be securely utilized as illuminating light.

In case ambient light has enough intensity, an observer can view display on the liquid crystal panel even if the spotlight is unlit. Therefore, the invention can contribute to power saving. Even if the spotlight is unlit because of failure, an observer can view display on the liquid crystal panel.

In addition, for the prismatic surface of the light guide plate, a prismatic surface already optimally designed and used for a front light can be not only used as it is but it is optimum to use as it is.

As described above, as the plural lens films for convergence are not required to be arranged between the light guide plate and the liquid crystal panel, the number of parts can be reduced and the cost can be reduced.

As an inverter required in case a fluorescent lamp is used is not required by using white LED which is a spotlight for a light source, the backlight, LCD provided with the backlight and electronic equipment provided with the LCD can be miniaturized and lightened.

It is apparent that the present invention is not limited to the above embodiments, but may be modified and changed without departing from the scope and spirit of the invention.

## Claims

1. A backlight unit for a LCD device, comprising:
a light guide plate;
at least one light source unit provided to at least one side of the light guide plate;
a reflector provided so that it is opposite to the rear surface of the light guide plate; and
plural reflection regions and plural transmission regions respectively provided at the rear surface of the light guide plate, wherein:
an angle between the surface of the light guide plate opposite to the rear surface and at least one of the reflection regions is larger than an angle between the surface and at least one of the transmission regions.

2. Portable terminal equipment, comprising:
the backlight unit for the LCD according to Claim 1.
